# EUROPÄISCHE PATENTANMELDUNG

(11) **EP 3 772 587 A1**
(43) Veröffentlichungstag der Anmeldung: **10.02.2021**
(21) Anmeldenummer: 19190960.5
(22) Anmeldetag: 09.08.2019
(51) Int. Cl.: F03G 7/04, F24T 10/15

(54) **ERDWÄRMESONDE**

(71) Anmelder: Jansen AG, 9463 Oberriet (CH)
(72) Erfinder: Alge, Dietmar, 6932 Langen bei Bregenz (AT)
(74) Vertreter: Fechner, Thomas

(57) **Zusammenfassung**

Erdwärmesonde (1) zur Gewinnung von Wärme aus dem Untergrund (2) und/oder zur Abgabe von Wärme an den Untergrund (2), wobei die Erdwärmesonde (1) in einem, in ein Bohrloch (3) eingebauten Zustand einen Sondenfuß (4) und eine in dem Bohrloch (3) verlaufende Einspeiseleitung (5) und eine neben der Einspeiseleitung (5) in dem Bohrloch (3) verlaufende Rückführleitung (6) aufweist, wobei die Einspeiseleitung (5) aus einem Einspeiserohr (7) oder zumindest zwei nebeneinander verlaufenden Einspeiserohren (7) besteht und die Rückführleitung (6) aus einem Rückführrohr (8) oder zumindest zwei nebeneinander verlaufenden Rückführrohren (8) besteht, wobei die Einspeiseleitung (5) und die Rückführleitung (6) mittels des Sondenfußes (4) zum Transport von Wärmeträgerflüssigkeit, durch die Einspeiseleitung (5) und den Sondenfuß (4) und die Rückführleitung (6) hindurch, flüssigkeitsleitend miteinander verbunden sind, wobei der für den Transport der Wärmeträgerflüssigkeit wirksame Öffnungsquerschnitt (9) der Einspeiseleitung (5) größer ist als der für den Transport der Wärmeträgerflüssigkeit wirksame Öffnungsquerschnitt (10) der Rückführleitung (6).

## Beschreibung

Die vorliegende Erfindung betrifft eine Erdwärmesonde zur Gewinnung von Wärme aus dem Untergrund und/oder zur Abgabe von Wärme an den Untergrund, wobei die Erdwärmesonde in einem, in ein Bohrloch eingebauten Zustand einen Sondenfuß und eine in dem Bohrloch verlaufende Einspeiseleitung und eine neben der Einspeiseleitung in dem Bohrloch verlaufende Rückführleitung aufweist, wobei die Einspeiseleitung aus einem Einspeiserohr oder zumindest zwei nebeneinander verlaufenden Einspeiserohren besteht und die Rückführleitung aus einem Rückführrohr oder zumindest zwei nebeneinander verlaufenden Rückführrohren besteht, wobei die Einspeiseleitung und die Rückführleitung mittels des Sondenfußes zum Transport von Wärmeträgerflüssigkeit, durch die Einspeiseleitung und den Sondenfuß und die Rückführleitung hindurch, flüssigkeitsleitend miteinander verbunden sind.

Erdwärmesonden zur Gewinnung von Wärme aus dem Untergrund und/oder zur Abgabe von Wärme an den Untergrund sind beim Stand der Technik in verschiedenen Ausgestaltungsformen bekannt. Z. B. gibt es gattungsgemäße sogenannte U-Sonden, bei denen die Einspeiseleitung und die Rückführleitung nebeneinander in einem Bohrloch verlaufen und am zum Bohrlochtiefsten weisenden Ende der Erdwärmesonde mittels eines Sondenfußes miteinander flüssigkeitsleitend verbunden sind.

Darüber hinaus gibt es beim Stand der Technik auch sogenannte Koaxialsonden. Dabei handelt es sich nicht um gattungsfremde Erdwärmesonden, da die Rückführleitung innerhalb der Einspeiseleitung angeordnet ist und somit Rückführleitung und Einspeiseleitung nicht nebeneinander im Bohrloch verlaufen.

Die beim Stand der Technik bekannten U-Sonden sind im Vergleich zu den Koaxialsonden relativ günstig herstellbar, haben aber den Nachteil, dass ihre thermische Ausbeute bzw. Leistung schlechter als bei einer Koaxialsonde ist. Die Koaxialsonde hat eine thermische Ausbeute bzw. Leistung, ist aber in der Praxis mit höheren Kosten verbunden.

Die Aufgabe der Erfindung ist es, eine gattungsgemäße Erdwärmesonde dahingehend zu verbessern, dass sie eine bessere thermische Ausbeute bzw. Leistung bei gleichem Bohrdurchmesser erreicht als die beim Stand der Technik bekannten gattungsgemäßen Erdwärmesonden.

Dies wird dadurch erreicht, dass der für den Transport der Wärmeträgerflüssigkeit wirksame Öffnungsquerschnitt der Einspeiseleitung größer ist als der für den Transport der Wärmeträgerflüssigkeit wirksame Öffnungsquerschnitt der Rückführleitung.

Dadurch; dass gemäß der Erfindung der für den Transport der Wärmeträgerflüssigkeit wirksame Öffnungsquerschnitt der Einspeiseleitung größer ist als der für den Transport der Wärmeträgerflüssigkeit wirksame Öffnungsquerschnitt der Rückführleitung, wird erreicht, dass die Wärmeträgerflüssigkeit in der Einspeiseleitung langsamer strömt als in der Rückführleitung. Hierdurch hat die Wärmeträgerflüssigkeit in der Einspeiseleitung mehr Zeit, Wärme aus dem Untergrund aufzunehmen oder an den Untergrund abzugeben, je nachdem, ob die Erdwärmesonde zum Heizen oder zum Kühlen eines Gebäudes verwendet wird. Durch den kleineren, für den Transport der Wärmeträgerflüssigkeit wirksamen Öffnungsquerschnitt in der Rückführleitung wird die Wärmeträgerflüssigkeit in der Rückführleitung schneller transportiert, sodass im Falle der Gewinnung von Wärme aus dem Untergrund in der Rückführleitung geringere Wärmeverluste entstehen und im Falle der Nutzung der Erdwärmesonde zur Abgabe von Wärme an den Untergrund das unerwünschte Wiederaufwärmen der Wärmeträgerflüssigkeit beim Durchströmen der Rückführleitung möglichst unterbunden bzw. gering gehalten wird. Dies erlaubt es im Vergleich zu konventionellen gattungsgemäßen U-Sonden, eine größere thermische Ausbeute bzw. Leistung der Erdwärmesonde bei gleich großem Durchmesser des Bohrlochs zu erreichen. Anders herum gesagt, können mit erfindungsgemäßen Erdwärmesonden bei kleinerem Bohrlochdurchmesser dieselben Wärmeleistungen erreicht werden wie mit konventionellen Erdwärmesonden in größeren Bohrlochdurchmessern. Dies führt automatisch auch zu einer Kostenreduzierung, da mit kleineren Bohrdurchmessern gearbeitet werden kann.

Der Begriff des für den Transport der Wärmeträgerflüssigkeit wirksamen Öffnungsquerschnitts bezeichnet die jeweilige Querschnittsfläche des Transporthohlraums der Einspeiseleitung bzw. der Rückführleitung. Man könnte auch jeweils von der Öffnungsquerschnittsfläche sprechen.

Die Einspeiseleitung kann aus einem einzigen Einspeiserohr aber auch aus zumindest zwei, also zwei oder mehr, nebeneinander verlaufenden Einspeiserohren bestehen. Das gleiche gilt für die Rückführleitung. Auch diese kann aus einem einzigen Rückführrohr, aber auch aus zumindest zwei und damit zwei oder mehr nebeneinander verlaufenen Rückführrohren bestehen. Im eingebauten Zustand der Erdwärmesonde in das Bohrloch verlaufen alle Einspeiserohre oder Einspeiseleitungen wie auch alle Rückführrohre der Rückführleitungen nebeneinander im selben Bohrloch. Das nebeneinander Verlaufen besagt dabei im Wesentlichen, dass die besagten Leitungen bzw. Rohre einerseits gemeinsam in ein und demselben Bohrloch angeordnet sind, andererseits aber eben nicht koaxial ineinander angeordnet sind. Welche dieser Rohre der genannten Leitungen nun direkt nebeneinander bzw. direkt benachbart zueinander angeordnet sind, ist dabei offen und kann unterschiedlich ausgestaltet sein. Besteht die Einspeiseleitung aus einem einzigen Einspeiserohr, so besteht der für den Transport der Wärmeträgerflüssigkeit wirksame Öffnungsquerschnitt der Einspeiseleitung aus der Querschnittsfläche des Transporthohlraums dieses einzigen Einspeiserohres. Besteht die Einspeiseleitung aus zwei oder mehr nebeneinander verlaufenden Einspeiserohren, so besteht der für den Transport der Wärmeträgerflüssigkeit wirksame Öffnungsquerschnitt der Einspeiseleitung aus der Summe der Querschnittsflächen der Transporthohlräume aller Einspeiserohre der Einspeiseleitung. Dasselbe gilt für die Rückführleitung. Besteht die Rückführleitung aus einem einzigen Rückführrohr, so ist der für den Transport der Wärmeträgerflüssigkeit wirksame Öffnungsquerschnitt die Querschnittsfläche des Transporthohlraums dieses einzigen Rückführrohres. Besteht die Rückführleitung aus mehreren im Bohrloch nebeneinander verlaufenden Rückführrohren, so ist der für den Transport der Wärmeträgerflüssigkeit wirksame Öffnungsquerschnitt gleich der Summe der Querschnittsflächen der Transporthohlräume aller Rückführrohre der Rückführleitung. Die Transporthohlräume des bzw. der Einspeiserohre und die Transporthohlräume des bzw. der Rückführrohre können jeweils eine kreisrunde Querschnittsfläche aufweisen. Dies muss aber nicht zwingend so sein. Unabhängig von den jeweiligen Ausgestaltungsformen ist es jedenfalls so, dass die Einspeiseleitung bzw. deren Einspeiserohr oder deren Einspeiserohre und die Rückführleitung bzw. deren Rückführrohr oder deren Rückführrohre mittels des Sondenfußes in der Art und Weise fluidleitend miteinander, dass die Wärmeträgerflüssigkeit durch die Einspeiseleitung in Richtung hin zum Sondenfuß, dann durch den Sondenfuß hindurch und über die Rückführleitung zurück strömen kann.

Der Vollständigkeit halber wird darauf hingewiesen, dass es sich bei erfindungsgemäßen Erdwärmesonden nicht um Koaxialsonden handelt, da die Einspeiseleitung und die Rückführleitung nicht ineinander sondern eben nebeneinander im Bohrloch verlaufend angeordnet sind.

Bevorzug ist vorgesehen, dass der für den Transport der Wärmeträgerflüssigkeit wirksame Öffnungsquerschnitt in der Einspeiseleitung über die gesamte Erstreckung der Einspeiseleitung konstant ist. Genauso bevorzugt kann vorgesehen sein, dass der für den Transport der Wärmeträgerflüssigkeit wirksame Öffnungsquerschnitt in der Rückführleitung über die gesamte Erstreckung der Rückführleitung konstant ist.

Wenn der für den Transport der Wärmeträgerflüssigkeit wirksame Öffnungsquerschnitt in der Einspeiseleitung und oder in der Rückführleitung nicht über die gesamte Erstreckung der jeweiligen Leitung konstant ist, so ist bei erfindungsgemäßen Erdwärmesonden zumindest vorgesehen, dass der kleinste für den Transport der Wärmeträgerflüssigkeit wirksame Öffnungsquerschnitt der Einspeiseleitung größer ist als der größte für den Transport der Wärmeträgerflüssigkeit wirksame Öffnungsquerschnitt der Rückführleitung.

Bevorzugt ist somit vorgesehen, dass der für den Transport der Wärmeträgerflüssigkeit wirksame Öffnungsquerschnitt der Einspeiseleitung über den gesamten Verlauf der Erdwärmesonde größer ist als der für den Transport der Wärmeträgerflüssigkeit wirksame Öffnungsquerschnitt der Rückführleitung.

Bei der Frage, wo der größere für den Transport der Wärmeträgerflüssigkeit wirksame Öffnungsquerschnitt der Einspeiseleitung in den kleineren, für den Transport der Wärmeträgerflüssigkeit wirksamen Öffnungsquerschnitt der Rückführleitung überführt wird, ist günstigerweise vorgesehen, dass ein Übergangsbereich des für den Transport der Wärmeträgerflüssigkeit wirksamen Öffnungsquerschnitts von der Einspeiseleitung zur Rückführleitung innerhalb des Sondenfußes angeordnet ist. Besonders bevorzugt gilt hierbei, dass der für den Transport der Wärmeträgerflüssigkeit wirksame Öffnungsquerschnitt im Übergangsbereich des Sondenfußes von der Einspeiseleitung in Richtung hin zur Rückführleitung, vorzugsweise stetig, abnimmt.

Bei bevorzugten Ausgestaltungsformen der Erfindung liegt der für den Transport der Wärmeträgerflüssigkeit wirksame Öffnungsquerschnitt der Einspeiseleitung günstigerweise in einem Bereich von 520 mm² bis 5200 mm², vorzugsweise von 830 mm² bis 3820 mm².

Der für den Transport der Wärmeträgerflüssigkeit wirksame Öffnungsquerschnitt der Rückführleitung hingegen liegt günstigerweise in einem Bereich von 200 mm² bis 1320 mm², vorzugsweise von 320 mm² bis 850 mm².

Für das Verhältnis der Öffnungsquerschnitte gilt günstigerweise, dass der für den Transport der Wärmeträgerflüssigkeit wirksame Öffnungsquerschnitt in der Einspeiseleitung zu dem für den Transport der Wärmeträgerflüssigkeit wirksamen Öffnungsquerschnitt in der Rückführleitung in einem Verhältnis von 1,5:1 bis 13:1, vorzugsweise 2:1 bis 8:1, steht.

Aus der EP 3 293 476 A1 ist es an sich bekannt, für Erdwärmesonden Rohre zu verwenden, deren Rohrwandung auf der dem Transporthohlraum für die Wärmeträgerflüssigkeit zugewandten Innenoberfläche längserstreckte Rippen aufweist, um die Druckverluste im Rohr bzw. der Leitung gering zu halten. Dies kommt günstigerweise auch bei dem Rückführrohr oder den Rückführrohren der Rückführleitung erfindungsgemäßer Erdwärmesonden zum Einsatz. Günstigerweise ist somit vorgesehen, dass in einer Rohrwandung des Rückführrohres oder in Rohrwandungen der Rückführrohre an deren, einem Transporthohlraum für die Wärmeträgerflüssigkeit zugewandten Innenoberfläche(n) eine Abfolge von voneinander beabstandeten und in Längserstreckungsrichtung des, vorzugsweise jeweiligen, Rückführrohres längserstreckten Rippen angeordnet ist, wobei zwischen zwei benachbart zueinander angeordneten Rippen jeweils eine Vertiefung angeordnet ist und die Rippen weiter in den Transporthohlraum hineinragen als die Vertiefungen, wobei vorzugsweise vorgesehen ist, dass die Rippen in Richtung in den Transporthohlraum hinein, in einem Querschnitt durch das Rohr orthogonal zur Längserstreckungsrichtung des, vorzugsweise jeweiligen, Rückführrohres gesehen, zumindest bereichsweise verjüngt ausgebildet sind. Hierbei können die Rippen und die dazwischenliegenden Vertiefungen in der Innenoberfläche der jeweiligen Rohrwandung unterschiedlich ausgestaltet sein, wie dies in verschiedenen Varianten in der genannten Schrift gezeigt ist.

Neben der Erdwärmesonde an sich betrifft die Erfindung auch ein Bohrloch mit einer erfindungsgemäßen Erdwärmesonde, wobei die Erdwärmesonde mit dem Sondenfuß in Richtung hin zum Bohrlochtiefsten des Bohrloches in dem Bohrloch angeordnet ist und das Einspeiserohr oder die Einspeiserohre der Einspeiseleitung neben dem Rückführrohr oder den Rückführrohren der Rückführleitung im Bohrloch angeordnet sind. Das Bohrlochtiefste ist dabei das dem Bohrlochmund gegenüberliegende Ende des Bohrlochs.

Darüber hinaus betrifft die Erfindung auch ein Verfahren zum Betrieb einer erfindungsgemäßen Erdwärmesonde. Bei diesem ist vorgesehen, dass die Wärmeträgerflüssigkeit in der Einspeiseleitung langsamer transportiert wird als in der Rückführleitung. Dabei ist günstigerweise vorgesehen, dass die Wärmeträgerflüssigkeit in der Einspeiseleitung zum Sondenfuß hin und in der Rückführleitung vom Sondenfuß weg strömt.

Weitere Merkmale und Einzelheiten bevorzugter Varianten der Erfindung werden nachfolgend in der Figurenbeschreibung anhand von verschiedenen Ausführungsbeispielen der Erfindung erläutert. Es zeigen:
- Fig. 1 bis 3: Darstellungen zu einem ersten Ausführungsbeispiel der Erfindung;
- Fig. 4 bis 6: Darstellungen zu einem zweiten Ausführungsbeispiel der Erfindung;
- Fig. 7 bis 9: Darstellungen zu einem dritten Ausführungsbeispiel der Erfindung;
- Fig. 10: eine Darstellung einer erfindungsgemäßen Erdwärmesonde bevor sie ins Bohrloch eingebaut ist;
- Fig. 11 bis 13: ein viertes Ausführungsbeispiel der Erfindung;
- Fig. 15 bis 17: ein fünftes Ausführungsbeispiel der Erfindung;
- Fig. 18 bis 20: ein sechstes Ausführungsbeispiel der Erfindung und
- Fig. 21: eine weitere Darstellung einer erfindungsgemäßen Erdwärmesonde vor dem Einbau eines Bohrlochs.

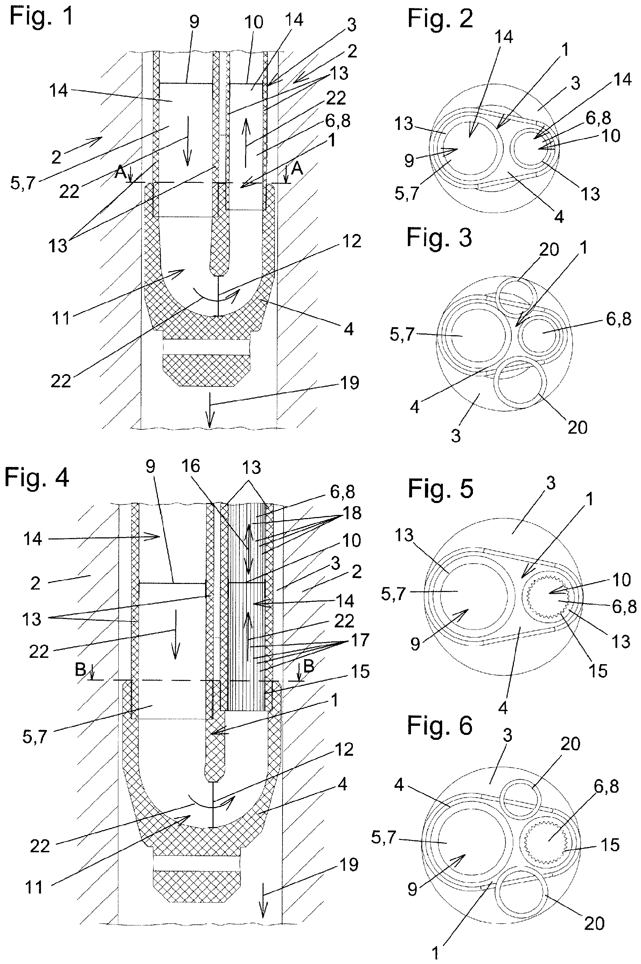

Fig. 1 bis 3 zeigen ein erstes Ausführungsbeispiel der Erfindung, bei dem die erfindungsgemäße Erdwärmesonde 1 in einem Bohrloch 3 eingebaut ist. Die Erdwärmesonde 1 dieses Ausführungsbeispiel weist einen Sondenfuß 4 und eine Einspeiseleitung 5 sowie eine Rückführleitung 6 auf. Die Einspeiseleitung 5 und die Rückführleitung 6 sind mittels des Sondenfußes 4 flüssigkeitsleitend miteinander verbunden, und zwar so, dass die Wärmeträgerflüssigkeit von der Einspeiseleitung 5 kommend durch den Sondenfuß 4 hindurch in die Rückführleitung 6 einströmen kann.

Bei diesem ersten Ausführungsbeispiel besteht die Einspeiseleitung 5 aus einem einzigen Einspeiserohr 7, die Rückführleitung 6 besteht aus einem einzigen Rückführrohr 8. In Fig. 1 ist ein Längsschnitt durch das Bohrloch im Bereich um den Sondenfuß dargestellt. Zu sehen sind die zum Bohrloch 3 benachbarten Bereiche des Untergrunds 2 sowie ein Längsschnitt durch den Sondenfuß 4 sowie die Einspeiseleitung 5 und die Rückführleitung 6. Die Pfeile 22 geben die Strömungsrichtung des Wärmeträgerfluides an, wenn es vom nicht dargestellten Bohrlochmund bzw. Sondenkopf durch die Einspeiseleitung 15 hindurch in Richtung Sondenfuß 4, durch den Sondenfuß 4 hindurch und dann in der Rückführleitung 6 wieder in Richtung hin zum hier nicht dargestellten Bohrlochmund bzw. Sondenkopf transportiert wird.

Am Bohrlochmund bzw. am Sondenkopf können in an sich bekannter Art und Weise Pumpen und Wärmetauscher angeschlossen sein. Die erfindungsgemäßen Erdwärmesonden des ersten Ausführungsbeispiels wie auch aller anderen hier gezeigten Ausführungsbeispiele können sowohl zum Kühlen als auch zum Heizen von Gebäuden eingesetzt werden. Es kann mit erfindungsgemäßen Erdwärmesonden somit zum Heizen eines Gebäudes Wärme aus dem Untergrund 2 gewonnen aber auch zum Kühlen eines Gebäudes Wärme an den Untergrund 2 abgegeben werden. Zur Gewinnung der Wärme aus dem Untergrund 2 wird die kühle Wärmeträgerflüssigkeit auf ihrem Weg in der Einspeiseleitung 5 hin zum Sondenfuß 4 vom Untergrund 2 erwärmt. Die erwärmte Wärmeträgerflüssigkeit wird dann über die Rückführleitung 6 zurück zum Bohrlochmund bzw. Sondenkopf und damit hin zum Wärmetauscher transportiert, sodass dann dort in an sich bekannter Art und Weise die Wärme aus der Wärmeträgerflüssigkeit gewonnen werden kann. Im Fall der Nutzung der Erdwärmesonde 1 zur Kühlung eines Gebäudes und damit zur Abgabe von Wärme an den Untergrund 2 gibt die Wärmeträgerflüssigkeit auf Ihrem Weg durch die Einspeiseleitung 5 hin zum Sondenfuß 4 Wärme an den Untergrund 2 ab. Die abgekühlte Wärmeträgerflüssigkeit wird dann über die Rückführleitung 6 zurück zum Wärmetauscher am Sondenkopf transportiert, um dort im Wärmetauscher neue Wärme aufnehmen zu können. Der Transport der Wärmeträgerflüssigkeit erfolgt im Transporthohlraum 14 des Einspeiserohres 7, welches in diesem ersten Ausführungsbeispiel die gesamte Einspeiseleitung 5 darstellt, und im Transporthohlraum 14 des Rückführrohres 8, welches in diesem Ausführungsbeispiel die gesamte Rückführleitung 6 darstellt.

Als Wärmeträgerflüssigkeit kommen alle an sich bekannten, für diesen Zweck geeigneten Flüssigkeiten in Frage. Z. B. kann dies Wasser, eine Mischung aus Wasser und Frostschutzmittel o. dgl. sein.

Der Pfeil 19 weist in Richtung hin zum Bohrlochtiefsten also dem, dem Bohrlochmund gegenüberliegenden Ende des Bohrlochs 3. Das Bohrloch 3 ist meist mehr oder weniger vertikal in den Untergrund 2 eingebracht. Es kann aber auch schräg oder horizontal verlaufen. Nach Einbringung der Erdwärmesonde 1 in das Bohrloch 3 werden die außerhalb der Einspeiseleitung 5 und der Rückführleitung 6 sowie des Sondenfußes 4 verbleibenden Hohlräume des Bohrlochs 3 in an sich bekannter Art und Weise mit Verfüllmaterial verfüllt, wie dies beim Stand der Technik an sich bekannt ist. Das Einspeiserohr 7 der Einspeiseleitung 5 und das Rückführrohr 8 der Rückführleitung 6 verlaufen jedenfalls im, in Fig. 1 dargestellten eingebauten Zustand nebeneinander in dem Bohrloch 3. Es handelt sich somit nicht um eine Koaxialsonde.

Erfindungsgemäß ist vorgesehen, dass der für den Transport der Wärmeträgerflüssigkeit wirksame Öffnungsquerschnitt 9 der Einspeiseleitung 5, also hier des einzigen Einspeiserohres 7, größer als der für den Transport der Wärmeträgerflüssigkeit wirksame Öffnungsquerschnitt 10 der Rückführleitung 6, also hier im ersten Ausführungsbeispiel des einzigen Rückführrohres 8, ist. Hierdurch wird in ein sogenannter Venturi-Effekt erreicht, so dass die Wärmeträgerflüssigkeit in der Einspeiseleitung 5 bzw. hier in dem einzigen Einspeiserohr 7 langsamer strömt als in der Rückführleitung 6 bzw. dem hier einzigen Rückführrohr 8. Hierdurch wird erreicht, dass die Wärmeträgerflüssigkeit während des Durchströmens der Einspeiseleitung 5 mehr Zeit zum Wärmeaustausch mit dem Untergrund 2 hat. Durch die höhere Strömungsgeschwindigkeit in der Rückführleitung 6 wird erreicht, dass die je nach Anwendung vorher erwärmte oder eben vorher abgekühlte Wärmeträgerflüssigkeit möglichst verlustarm zum Sondenkopf und damit zum Wärmetauscher zurücktransportiert wird. Hierdurch wird, verglichen mit den beim Stand der Technik bekannten U-Sonden, bei gleichem Bohrlochdurchmesser eine höhere Leistung der Erdwärmsonde 1 erreicht. Anders herum ist es möglich, mit der Erfindung dieselbe Leistung wie der Stand der Technik aber eben in Bohrlöchern mit geringerem Durchmesser zu erzielen, wodurch die Bohrkosten und damit die Gesamtkosten für die Installation der Erdwärmesonde 1 reduziert werden können.

In diesem ersten Ausführungsbeispiel ist der, für den Transport der Wärmeträgerflüssigkeit wirksame Öffnungsquerschnitt 9 in der Einspeiseleitung 5 über die gesamte Erstreckung der Einspeiseleitung 5 ebenso konstant, wie der für den Transport der Wärmeträgerflüssigkeit wirksame Öffnungsquerschnitt 10 in der Rückführleitung 6 über die gesamte Erstreckung der Rückführleitung 6 konstant ist. Es ist somit auch hier realisiert, dass der für den Transport der Wärmeträgerflüssigkeit wirksame Öffnungsquerschnitt 9 der Einspeiseleitung 5 über den gesamten Verlauf der Erdwärmesonde 6 größer ist, als der für den Transport der Wärmeträgerflüssigkeit wirksame Öffnungsquerschnitt 10 der Rückführleitung 6.

In Fig. 1 ist auch gut zu erkennen, dass der Übergangsbereich 11 des für den Transport der Wärmeträgerflüssigkeit wirksamen Öffnungsquerschnitts 12 von der Einspeiseleitung 5 zur Rückführleitung 6 in diesem Ausführungsbeispiel innerhalb des Sondenfußes 4 angeordnet ist. In Fig. 1 ist auch gut zu erkennen, dass der für den Transport der Wärmeträgerflüssigkeit wirksame Öffnungsquerschnitt 12 im Übergangsbereich 11 des Sondenfußes 4 von der Einspeiseleitung 5 in Richtung hin zur Rückführleitung 6 stetig abnimmt. Durch diesen stetigen Übergang werden Verwirbelungen vermieden bzw. zumindest reduziert. In diesem ersten Ausführungsbeispiel gemäß der Fig. 1 bis 3 hat der Transporthohlraum 14 in der Einspeiseleitung 5 bzw. in dem einzigen Einspeiserohr 7 einen Durchmesser von 32,6 mm. Der Transporthohlraum 14 im Rückführrohr 8 und damit in diesem Ausführungsbeispiel in der gesamten Rückführleitung 6 weist einen Durchmesser von 20,4 mm auf. Der Bohrlochdurchmesser kann in diesem ersten Ausführungsbeispiel in einer Größenordnung von 79 mm bis 83 mm liegen.

Fig. 2 zeigt den Horizontalschnitt entlang der in Fig. 1 angezeichneten Schnittlinie bzw. Schnittebene A-A. Zu sehen ist hier somit eine Draufsicht auf den Sondenfuß 4 mit der in diesem einmündenden Einspeiseleitung 5 und der aus dem Sondenfuß 4 herauskommenden Rückführleitung 6. In Fig. 2 ist gut zu sehen, dass hier die Einspeiseleitung 5 aus einem einzigen Einspeiserohr 7 und die Rückführleitung 6 aus einem einzigen Rückführrohr 8 besteht. Gut zu sehen sind auch die Unterschiede in den für den Transport der Wärmeträgerflüssigkeit wirksamen Öffnungsquerschnitten 9 und 10 der Einspeiseleitung 5 und der Rückführleitung 6. Fig. 3 zeigt im Prinzip denselben Schnitt wie Fig. 2. In Fig. 3 sind allerdings noch an sich bekannte Injektionsrohre 20 eingezeichnet. Diese enden oberhalb des Sondenfußes 4 und dienen zum Verfüllen der außerhalb der Erdwärmesonde 1 verbleibenden Restvolumina im Bohrloch 3 mit Verfüllmaterial. Solche Injektionsrohre 20 sind an sich bekannt und müssen nicht weiter erläutert werden.

Das zweite Ausführungsbeispiel der Erfindung gemäß der Fig. 4 bis 6 ist über weite Bereiche analog zum ersten Ausführungsbeispiel ausgeführt und insbesondere ist auch beim zweiten Ausführungsbeispiel ein einziges Einspeiserohr 7 zur Ausbildung der Einspeiseleitung 5 und einziges Rückführrohr 8 zur Ausbildung der Rückführleitung 6 vorgesehen. Es wird im Folgenden nur noch auf die Unterschiede zum ersten Ausführungsbeispiel eingegangen, ansonsten wir auf die obigen Schilderungen des ersten Ausführungsbeispiel verwiesen.

Der erste Unterschied zum ersten Ausführungsbeispiel besteht darin, dass in diesem zweiten Ausführungsbeispiel größere Durchmesser und damit größere Öffnungsquerschnitte 9 und 10 gewählt wurden. Der Durchmesser des Transporthohlraums 14 im Einspeiserohr 7 dieses zweiten Ausführungsbeispiels beträgt 40,8 mm. Der Durchmesser des Transporthohlraums 14 im Rückführrohr 8 trägt in diesem zweiten Ausführungsbeispiel 26,2 mm, der Durchmesser des Bohrlochs beträgt in diesem zweiten Ausführungsbeispiel 96,5 mm. Darüber hinaus ist in diesem zweiten Ausführungsbeispiel vorgesehen, dass in einer Rohrwandung 13 des Rückführrohres 8 an deren dem Transporthohlraum 14 für die Wärmeträgerflüssigkeit zugewandten Innenoberfläche 15 eine Abfolge von voneinander beabstandeten und in Längserstreckungsrichtung des Rückführrohres 8 längserstreckten Rippen 17 angeordnet ist, wobei zwischen zwei benachbart zueinander angeordneten Rippen 17 jeweils eine Vertiefung 18 angeordnet ist und die Rippen 17 weiter in den Transporthohlraum 14 hineinragen als die Vertiefungen 18, wobei vorzugsweise vorgesehen ist, dass die Rippen 17 in Richtung in den Transporthohlraum hinein, in einem Querschnitt orthogonal zur Längserstreckungsrichtung 16 des Rückführrohres 8 gesehen, zumindest bereichsweise verjüngt ausgebildet sind. Durch die Ausbildung der in Längserstreckung 16 des Rückführrohres 8 längserstreckten Rippen 17 und der dazwischen angeordneten Vertiefungen 18 wird der beim Durchströmen des Rückführrohres 8 und damit der Rückführleitung 6 entstehende Druckverlust weiter herabgesetzt was einer höheren Transportgeschwindigkeit für die Wärmeträgerflüssigkeit in der Rückführleitung 6 weiter zuträglich ist. Entsprechende Rippen 17 und dazwischen angeordnete Vertiefungen 18 können auch in allen anderen Ausführungsbeispielen der Erfindung realisiert werden, um so die Strömungsgeschwindigkeit in der Rückführleitung 6 weiter heraufzusetzen. Wie eingangs bereits erläutert, sind in der EP 3 293 476 A1 verschiedene Ausgestaltungsformen von solchen Rippen 17 und dazwischen angeordneten Vertiefungen 18 gezeigt.

Fig. 5 zeigt den Horizontalschnitt entlang der Schnittebene bzw. Schnittlinie B-B aus Fig. 4. In Fig. 6 ist derselbe Schnitt dargestellt, wobei allerdings zusätzlich Injektionsrohre 20 vorgesehen sind, welche demselben Zweck dienen wie beim ersten Ausführungsbeispiel.

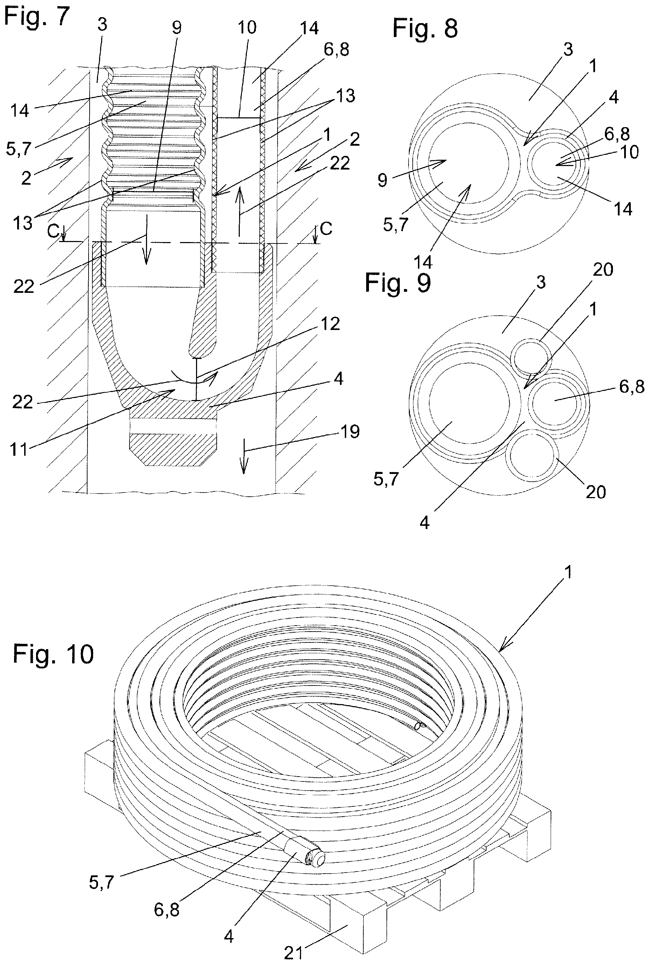

Beim dritten Ausführungsbeispiel der Erfindung gemäß der Fig. 7 bis 9 wird ebenfalls nur auf die Unterschiede zum ersten Ausführungsbeispiel eingegangen und ansonsten auf die Schilderung des ersten Ausführungsbeispiels verwiesen. Die Unterscheide liegen wiederum in den Durchmessern der Transporthohlräume 14 der Einspeiseleitung 5 und der Rückführleitung 6 sowie im Bohrlochdurchmesser. In diesem Ausführungsbeispiel beträgt der Durchmesser des für den Transport der Wärmeträgerflüssigkeit wirksamen Öffnungsquerschnitts 9 in der Einspeiseleitung 5 49,2 mm. Der Durchmesser des Öffnungsquerschnitts 10 in der Rückführleitung 6 beträgt in diesem dritten Ausführungsbeispiel 26,2 mm. Der Durchmesser des Bohrlochs 3 beträgt in diesem Ausführungsbeispiel 109,5 mm.

Ein weiterer Unterschied des dritten Ausführungsbeispiels zum ersten Ausführungsbeispiel besteht darin, dass hier das, die Einspeiseleitung 5 bildende Einspeiserohr 7 als sogenanntes Wellrohr ausgebildet ist. Hierdurch wird die zum Wärmeaustausch zur Verfügung stehende Oberfläche der Rohrwandung 13 des Einspeiserohrs 7 vergrößert. Als für den Transport der Wärmeträgerflüssigkeit wirksamer Öffnungsquerschnitt 9 der Einspeiseleitung 5 wird die Querschnittsfläche im Bereich der engsten Einengung des Wellrohres gemessen. Dieser Öffnungsquerschnitt 9 der Einspeiseleitung 5 ist auch in diesem Ausführungsbeispiel größer als der Öffnungsquerschnitt 10 in der Rückführleitung 6.

Im Horizontalschnitt entlang der Schnittlinie bzw. Schnittebene C-C aus Fig. 7, wie er in Fig. 8 dargestellt ist, ist wiederum auch für dieses dritte Ausführungsbeispiel gut erkennbar, dass die Einspeiseleitung 5 aus einem einzigen Einspeiserohr 7 und die Rückführleitung 6 aus einem einzigen Rückführrohr 8 besteht. Auch diese sind nebeneinander im Bohrloch 3 angeordnet. Auch die Verhältnisse der Öffnungsquerschnitte 9 und 10 in Einspeiseleitung 5 und Rückführleitung 6 sind gut zu erkennen. Fig. 9 zeigt wiederum denselben Schnitt wie Fig. 8, wobei zusätzlich die an sich bekannten Injektionsrohre 20 dargestellt sind.

Fig. 10 zeigt ein Beispiel, wie eine Erdwärmesonde 1 gemäß der Erfindung, hier mit einem einzigen Einspeiserohr 7 und einem einzigen Rückführrohr 8 und einem Sondenfuß 4, zusammengerollt und auf einer Palette 21 liegend zum Bohrloch transportiert werden kann um dort eingebaut zu werden.

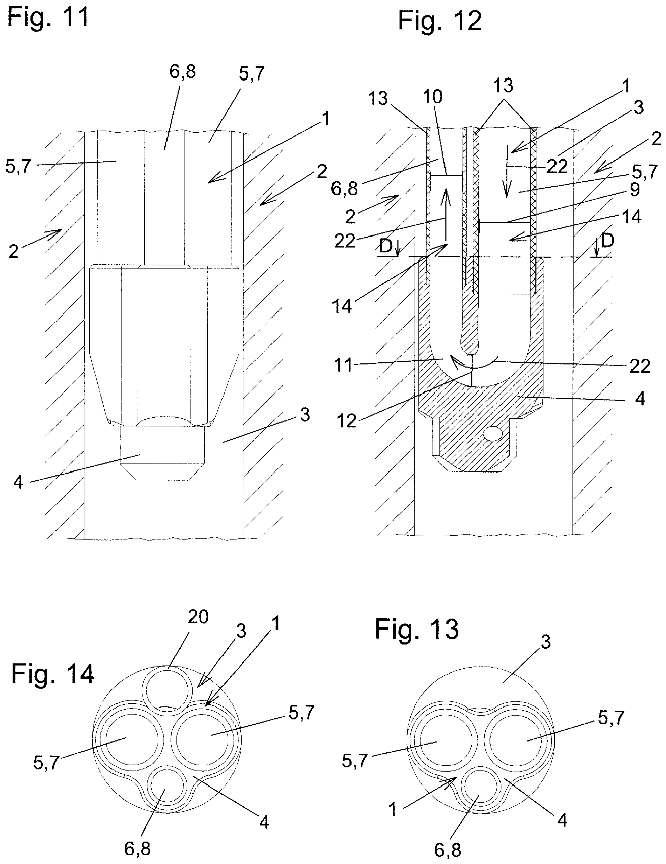

Die Fig. 11 bis 21 zeigen weitere Ausführungsbeispiele von Erdwärmesonden 1 gemäß der Erfindung. All diesen Ausführungsbeispielen ist gemeinsam, dass dort die Einspeiseleitung 5 aus zwei Einspeiserohren 7 besteht, während die Rückführleitung 6 aus einem Rückführrohr 8 besteht. Es handelt sich also ohne Beschränkung der Allgemeinheit um Beispiele dafür, dass die Einspeiseleitung 5 aus zwei oder mehr Einspeiserohren 7 bestehen kann. Der für den Transport der Wärmeträgerflüssigkeit wirksame Öffnungsquerschnitt 9 der Einspeiseleitung 5 ergibt sich dann aus der Summe der für den Transport der Wärmeträgerflüssigkeit wirksamen Öffnungsquerschnitte 9 der Einspeiserohre 7 der Einspeiseleitung 5. Auch wenn dies hier nicht explizit dargestellt ist, so kann auch die Rückführleitung 6 aus mehreren Rückführrohren 8 bestehen. Auch in diesem Fall ergibt sich der für den Transport der Wärmeträgerflüssigkeit wirksame Öffnungsquerschnitt 10 der Rückführleitung 6 dann aus der Summe der für den Transport der Wärmeträgerflüssigkeit wirksamen Öffnungsquerschnitte 10 der einzelnen Rückführrohre 8. In all diesen Fällen wird dann im Sinne der Erfindung immer der gesamte Öffnungsquerschnitt 9 der Einspeiseleitung 5 und der gesamte Öffnungsquerschnitt 10 der Rückführleitung 6 betrachtet, wenn es darum geht, dass der für den Transport der Wärmeträgerflüssigkeit wirksame Öffnungsquerschnitt 9 der Einspeiseleitung 5 größer ist als der für den Transport der Wärmeträgerflüssigkeit wirksame Öffnungsquerschnitt 10 der Rückführleitung 6.

Auch bei diesen Ausführungsbeispielen gemäß der Fig. 11 bis 21 wird nur noch auf die Unterschiede zum ersten Ausführungsbeispiel eingegangen und ansonsten auf die obigen Schilderungen des ersten Ausführungsbeispiels verwiesen.

Bei dem Ausführungsbeispiel gemäß den Fig. 11 bis 13 zeigt Fig. 11 einen Ausschnitt des Bohrlochs 3 mit dem darin in Seitenansicht sichtbaren Abschnitt der Erdwärmesonde 1. Zu sehen sind der Sondenfuß 4 und die beiden darin einmündenden Einspeiserohre 7 der Einspeiseleitung 5 und das ebenfalls mit dem Sondenfuß 4 verbundene Rückführrohr 8 der Rückführleitung 6. Fig. 12 zeigt einen dagegen um eine vertikale Achse gedrehten Längsschnitt, in dem der Sondenfuß 4, das Rückführrohr 8 der Rückführleitung 6 und eines der Einspeiserohre 7 der Einspeiseleitung 5 zu sehen sind. Ein Horizontalschnitt entlang der Schnittlinie D-D aus Fig. 12 ist in Fig. 13 dargestellt. Dort ist zu sehen, wie die beiden Einspeiserohre 7 der Einspeiseleitung 5 und das Rückführrohr 8 der Rückführleitung 6 in den Sondenfuß 4 einmünden. Es ist auch gut zu erkennen, dass wie erfindungsgemäß vorgesehen, der für den Transport der Wärmeträgerflüssigkeit wirksame Öffnungsquerschnitt 9 der Einspeiseleitung 5, also die Summe der Öffnungsquerschnitte 9 der beiden Einspeiserohre 7, größer ist als der für den Transport der Wärmeträgerflüssigkeit wirksame Öffnungsquerschnitt 10 der Rückführleitung 6. Fig. 14 zeigt denselben Schnitt wie Fig. 13, allerdings ist hier zusätzlich wiederum das oben bereits erläuterte Injektionsrohr 20 dargestellt. In diesem Ausführungsbeispiel gemäß der Fig. 11 bis 13 beträgt der Durchmesser des Transporthohlraums 14 des Rückführrohres 8 20,4 mm. Der Durchmesser des jeweiligen Transporthohlraums 14 des jeweiligen Einspeiserohres 7 beträgt in diesem Ausführungsbeispiel 32,6 mm, der Durchmesser des Bohrlochs 3 94 mm.

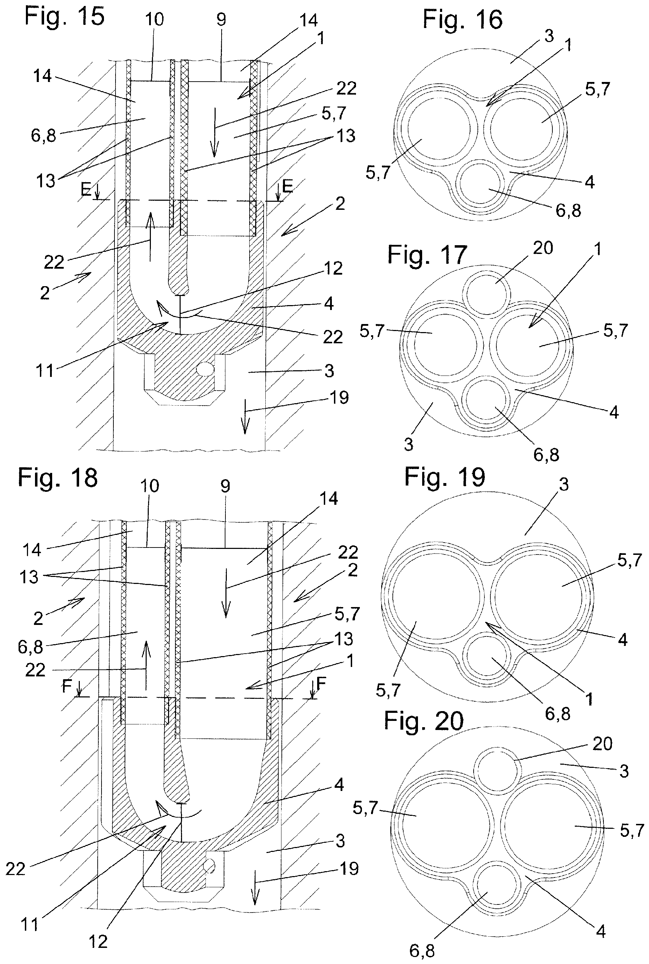

Die in den Fig. 15 bis 17 und in den Fig. 18 bis 20 dargestellten weiteren Ausführungsbeispiele der Erfindung unterscheiden sich vom Ausführungsbeispiel gemäß der Fig. 11 bis 14 lediglich bezüglich der Größe der Öffnungsquerschnitte 9 und 10 von Einspeiseleitung 5 und Rückführleitung 6 bzw. der Durchmesser der Transporthohlräume 15 der Einspeiserohre 7 und der Rückführrohre 8 sowie der Bohrlochdurchmesser.

In dem Ausführungsbeispiel gemäß der Fig. 15 bis17 haben die des jeweiligen Transporthohlräume 14 der jeweiligen Einspeiserohre 7 einen Durchmesser von 40,8 mm. Der Transporthohlraum 14 des Rückführrohres 8 hat einen Durchmesser von 26,2 mm. Das Bohrloch 3 hat einen Durchmesser von 114 mm. Fig. 16 zeigt wiederum den Horizontalschnitt entlang der Schnittlinie E-E aus Fig. 15. Fig. 17 zeigt denselben Schnitt wie Fig. 16, allerdings mit Injektionsrohr 20.

Beim Ausführungsbeispiel gemäß der Fig. 18 bis 20 hat der jeweilige Transporthohlraum 15 des jeweiligen Einspeiserohrs 7 einen Durchmesser von 57,2 mm. Der Transporthohlraum 14 des Rückführrohres 8 weist einen Durchmesser von 26,2 mm auf, das Bohrloch einen Durchmesser von 140 mm. Auch hier zeigt Fig. 19 den Schnitt entlang der Schnittebene bzw. Schnittlinie F-F aus Fig. 18. Fig. 20 zeigt wiederum denselben Schnitt wie Fig. 19 mit dem darin zusätzlich angeordneten Injektionsrohr 20.

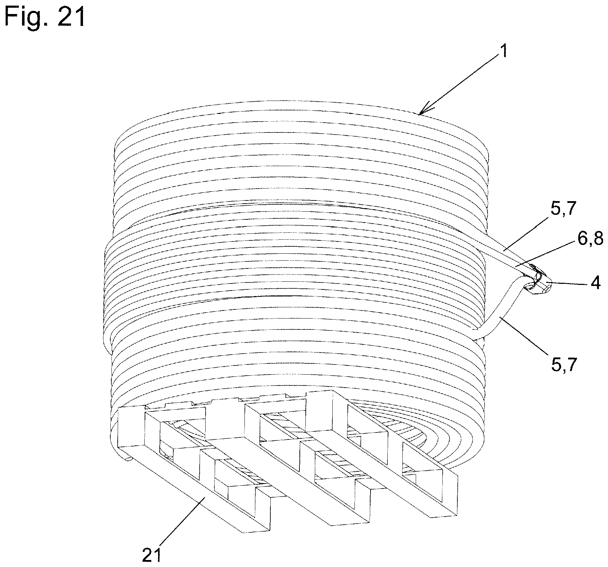

Fig. 21 zeigt beispielhaft wie eine erfindungsgemäße Erdwärmesonde 1 mit zwei Einspeiserohren 7 und einem Rückführrohr 8, welche über den Sondenfuß 4 miteinander verbunden sind, im aufgerollten Zustand auf einer Palette 21 gelagert und auch zum Bohrloch transportiert werden kann. Jedes der Einspeiserohre 7 und das Rückführrohr 8 sind in sich zu einem Bündel aufgerollt. Die Bündel sind aufeinander gelagert und gemeinsam auf der Palette 21 gelagert. Das Bündel des Rückführrohrs 8 befindet sich in der Mitte zwischen den beiden Bündeln der Einspeiserohre 7. Das Verbinden der Einspeiserohre 7 und des Rückführrohres 8 mit dem Sondenfuß 4 kann bereits bei der Herstellung der Erdwärmesonde 1 durchgeführt werden, sodass dies dann nicht mehr auf der Baustelle vorgenommen werden muss. Natürlich können die Einspeiserohre 7 und das Rückführrohr 8 auch anders zu Bündeln oder zu einem Bündel aufgerollt sein. Die Bündel können z.B. anders als in Fig. 21 angeordnet sein. Es können auch alle Rohre 7 und 8 gemeinsam zu einem Bündel aufgerollt sein.

### Legende

### zu den Hinweisziffern:

- 1: Erdwärmesonde
- 2: Untergrund
- 3: Bohrloch
- 4: Sondenfuß
- 5: Einspeiseleitung
- 6: Rückführleitung
- 7: Einspeiserohr
- 8: Rückführrohr
- 9: Öffnungsquerschnitt
- 10: Öffnungsquerschnitt
- 11: Übergangsbereich
- 12: Öffnungsquerschnitt
- 13: Rohrwandung
- 14: Transporthohlraum
- 15: Innenoberfläche
- 16: Längserstreckungsrichtung
- 17: Rippe
- 18: Vertiefung
- 19: Richtung
- 20: Injektionsrohr
- 21: Palette
- 22: Strömungsrichtung

## Patentansprüche

1. Erdwärmesonde (1) zur Gewinnung von Wärme aus dem Untergrund (2) und/oder zur Abgabe von Wärme an den Untergrund (2), wobei die Erdwärmesonde (1) in einem, in ein Bohrloch (3) eingebauten Zustand einen Sondenfuß (4) und eine in dem Bohrloch (3) verlaufende Einspeiseleitung (5) und eine neben der Einspeiseleitung (5) in dem Bohrloch (3) verlaufende Rückführleitung (6) aufweist, wobei die Einspeiseleitung (5) aus einem Einspeiserohr (7) oder zumindest zwei nebeneinander verlaufenden Einspeiserohren (7) besteht und die Rückführleitung (6) aus einem Rückführrohr (8) oder zumindest zwei nebeneinander verlaufenden Rückführrohren (8) besteht, wobei die Einspeiseleitung (5) und die Rückführleitung (6) mittels des Sondenfußes (4) zum Transport von Wärmeträgerflüssigkeit, durch die Einspeiseleitung (5) und den Sondenfuß (4) und die Rückführleitung (6) hindurch, flüssigkeitsleitend miteinander verbunden sind, **dadurch gekennzeichnet, dass** der für den Transport der Wärmeträgerflüssigkeit wirksame Öffnungsquerschnitt (9) der Einspeiseleitung (5) größer ist als der für den Transport der Wärmeträgerflüssigkeit wirksame Öffnungsquerschnitt (10) der Rückführleitung (6).

2. Erdwärmesonde (1) nach Anspruch 1, **dadurch gekennzeichnet, dass** der für den Transport der Wärmeträgerflüssigkeit wirksame Öffnungsquerschnitt (9) der Einspeiseleitung (5) über den gesamten Verlauf der Erdwärmesonde (1) größer ist als der für den Transport der Wärmeträgerflüssigkeit wirksame Öffnungsquerschnitt (10) der Rückführleitung (6).

3. Erdwärmesonde (1) nach Anspruch 1 oder 2, **dadurch gekennzeichnet, dass** ein Übergangsbereich (11) des für den Transport der Wärmeträgerflüssigkeit wirksamen Öffnungsquerschnitts (12) von der Einspeiseleitung (5) zur Rückführleitung (6) innerhalb des Sondenfußes (4) angeordnet ist.

4. Erdwärmesonde (1) nach Anspruch 3, **dadurch gekennzeichnet, dass** der für den Transport der Wärmeträgerflüssigkeit wirksame Öffnungsquerschnitt (12) im Übergangsbereich (11) des Sondenfußes (4) von der Einspeiseleitung (5) in Richtung hin zur Rückführleitung (6), vorzugsweise stetig, abnimmt.

5. Erdwärmesonde (1) nach einem der Ansprüche 1 bis 4, **dadurch gekennzeichnet, dass** der für den Transport der Wärmeträgerflüssigkeit wirksame Öffnungsquerschnitt (9) in der Einspeiseleitung (5) zu dem für den Transport der Wärmeträgerflüssigkeit wirksamen Öffnungsquerschnitt (10) in der Rückführleitung (6) in einem Verhältnis von 1,5:1 bis 13:1, vorzugsweise 2:1 bis 8:1, steht.

6. Erdwärmesonde (1) nach einem der Ansprüche 1 bis 5, **dadurch gekennzeichnet, dass** der für den Transport der Wärmeträgerflüssigkeit wirksame Öffnungsquerschnitt (9) in der Einspeiseleitung (5) über die gesamte Erstreckung der Einspeiseleitung (5) konstant ist.

7. Erdwärmesonde (1) nach einem der Ansprüche 1 bis 6, **dadurch gekennzeichnet, dass** der für den Transport der Wärmeträgerflüssigkeit wirksame Öffnungsquerschnitt (10) in der Rückführleitung (6) über die gesamte Erstreckung der Rückführleitung (6) konstant ist.

8. Erdwärmesonde (1) nach einem der Ansprüche 1 bis 7, **dadurch gekennzeichnet, dass** in einer Rohrwandung (13) des Rückführrohres (8) oder in Rohrwandungen (13) der Rückführrohre (8) an deren, einem Transporthohlraum (14) für die Wärmeträgerflüssigkeit zugewandten Innenoberfläche(n) (15) eine Abfolge von voneinander beabstandeten und in Längserstreckungsrichtung (16) des, vorzugsweise jeweiligen, Rückführrohres (8) längserstreckten Rippen (17) angeordnet ist, wobei zwischen zwei benachbart zueinander angeordneten Rippen (17) jeweils eine Vertiefung (18) angeordnet ist und die Rippen (17) weiter in den Transporthohlraum (14) hineinragen als die Vertiefungen (18), wobei vorzugsweise vorgesehen ist, dass die Rippen (17) in Richtung in den Transporthohlraum (14) hinein, in einem Querschnitt orthogonal zur Längserstreckungsrichtung (16) des, vorzugsweise jeweiligen, Rückführrohres (8) gesehen, zumindest bereichsweise verjüngt ausgebildet sind.

9. Bohrloch (3) mit einer Erdwärmesonde (1) nach einem der Ansprüche 1 bis 8, wobei die Erdwärmesonde (1) mit dem Sondenfuß (4) in Richtung (19) hin zum Bohrlochtiefsten des Bohrloches (3) in dem Bohrloch (3) angeordnet ist und das Einspeiserohr (7) oder die Einspeiserohre (7) der Einspeiseleitung (5) neben dem Rückführrohr (8) oder den Rückführrohren (8) der Rückführleitung (6) im Bohrloch (3) angeordnet sind.

10. Verfahren zum Betrieb einer Erdwärmesonde (1) nach einem der Ansprüche 1 bis 8, wobei die Wärmeträgerflüssigkeit in der Einspeiseleitung (5) langsamer transportiert wird als in der Rückführleitung (6).
